# EUROPÄISCHE PATENTSCHRIFT

(11) **EP 2 823 934 B1**
(45) Veröffentlichungstag und Bekanntmachung des Hinweises auf die Patenterteilung: **18.02.2015**
(21) Anmeldenummer: 13175727.0
(22) Anmeldetag: 09.07.2013
(51) Int. Cl.: B24B 19/12, B24B 5/42, B24B 21/16

(54) **Vorrichtung zur Feinbearbeitung einer Werkstückumfangsfläche und Verfahren zum Betrieb der Vorrichtung**
Device for finishing a peripheral area of a workpiece and method for operating the device
Dispositif d'usinage de précision d'une surface périphérique de pièce et procédé de fonctionnement du dispositif

(43) Veröffentlichungstag der Anmeldung: 14.01.2015
(73) Patentinhaber: Supfina Grieshaber GmbH & Co. KG, 77709 Wolfach (DE)
(72) Erfinder: Huber, Michael, 77776 Bad Rippoldsau (DE); Müller, Markus, 77709 Oberwolfach (DE); Seger, Martin, 77709 Wolfach (DE); Haas, Alfons, 77709 Sankt Roman/Wolfach (DE); Hildebrandt, Oliver, 78132 Hornberg (DE)
(74) Vertreter: DREISS Patentanwälte PartG mbB

(56) Entgegenhaltungen:
- DE-A1- 4 235 408
- FR-A1- 2 825 652
- US-A- 5 367 866

## Beschreibung

Die Erfindung betrifft eine Vorrichtung zur Feinbearbeitung einer bezogen auf eine Werkstückachse eines Werkstücks exzentrisch angeordneten Werkstückumfangsfläche, insbesondere eines Hublagers einer Kurbelwelle oder einer Nockenwelle, mit einer Andrückeinrichtung zum Andrücken eines Feinbearbeitungswerkzeugs gegen die Werkstückumfangsfläche.

Lagerflächen von Kurbel- und Nockenwellen werden bei sehr hohen Anforderungen an die Oberflächenqualität mehrfach hintereinander bearbeitet. Außerdem müssen insbesondere bei Kurbel- und Nockenwellen vielzylindriger Verbrennungsmotoren eine Vielzahl von Lagerflächen bearbeitet werden. Diese Faktoren bedingen lange Bearbeitungszeiten.

Aus der DE 100 09 980 C1 ist eine Vorrichtung zur Finishbearbeitung von Kurbel- und Nockenwellen bekannt. Die Vorrichtung umfasst eine Andrückeinrichtung zum Andrücken eines Finishbands gegen eine zu bearbeitenden Lagerfläche des Werkstücks. Während der Bearbeitung der Lagerfläche wird das Werkstück um eine Werkstückachse gedreht. Dabei wird die exzentrisch zu der Werkstückachse angeordnete Lagerfläche entlang einer Kreisbahn um die Werkstückachse bewegt. Die Andrückeinrichtung ist an einem Kreuzschlitten gehalten, sodass die Andrückeinrichtung der Kreisbahnbewegung der zu bearbeitenden Lagerfläche folgen kann.

Aus der FR 2 825 652 A1 ist eine Vorrichtung mit den Merkmalen des Oberbegriffs des Patentanspruchs 1 bekannt. Weitere Vorrichtungen zur Bearbeitung von Kurbelwellen oder Nockenwellen sind aus der DE 42 35 408 A1 und aus der US 5,367,866 A bekannt.

Es hat sich herausgestellt, dass mit aus dem Stand der Technik bekannten Vorrichtungen die Bearbeitungszeiten zur Feinbeabeitung von Werkstückumfangsflächen nicht oder nur sehr geringfügig verkürzt werden können.

Der vorliegenden Erfindung liegt die Aufgabe zugrunde, eine Vorrichtung der eingangs genannten Art zu schaffen, welche möglichst kurze Bearbeitungszeiten ermöglicht.

Diese Aufgabe wird bei einer Vorrichtung mit den Merkmalen des Oberbegriffs des Anspruchs 1 erfindungsgemäß durch die kennzeichnenden Merkmale des Anspruchs 1 gelöst.

Die erfindungsgemäße Vorrichtung ermöglicht es, einen Wirkbereich der Andrückeinrichtung innerhalb einer quer zu der Werkstückachse verlaufenden Bewegungsebene zu bewegen und so die Position des Wirkbereichs der Andrückeinrichtung innerhalb der Bewegungsebene zu steuern. Der Wirkbereich ist derjenige Bereich, welcher mit dem Feinbearbeitungswerkzeug zusammenwirkt. Ein Zentrum des Wirkbereichs wird nachfolgend auch als "Wirkmittelpunkt" bezeichnet.

Erfindungsgemäß ist vorgesehen, dass die Andrückeinrichtung bedarfsweise nicht nur passiv einer Bewegung der zu bearbeitenden Werkstückumfangsfläche folgt, sondern dass die Position des Wirkbereichs der Andrückeinrichtung innerhalb der Bewegungsebene mittels des ersten Antriebs und des zweiten Antriebs der Antriebseinrichtung gezielt ansteuerbar ist.

Die Ansteuerung einer Position eines Wirkbereichs der Andrückeinrichtung innerhalb der Bewegungsebene hat den Vorteil, dass zur Vorbereitung einer Feinbearbeitung der Werkstückumfangsfläche der Wirkbereich Andrückeinrichtung in eine Zielposition verfahren werden kann. Diese Zielposition hängt von der Drehlage der als nächstes zu bearbeitenden Werkstückumfangsfläche relativ zu der Werkstückachse des Werkstücks ab. Die Position der Werkstückumfangsfläche relativ zu der Werkstückachse variiert, wie eingangs beschrieben, entlang einer Kreisbahn. Es nun möglich, unabhängig von der Position der Werkstückumfangsfläche entlang dieser Kreisbahn die Andrückeinrichtung zur Vorbereitung einer Feinbearbeitung in eine jeweils entsprechende Position zu bringen. Nach Abschluss einer Feinbearbeitung kann die Andrückeinrichtung wiederum unabhängig von der aktuellen Drehlage des Werkstücks von der Werkstückumfangsfläche entfernt und in eine Position verbracht werden, in welcher die Kurbelwelle gehandhabt (beispielsweise um die Werkstückachse verdreht und/oder entlang der Werkstückachse verschoben) werden kann, insbesondere zur Vorbereitung der Feinbearbeitung einer anderen Werkstücksumfangsfläche des Werkstücks.

Erfindungsgemäß wurde erkannt, dass die Bearbeitungszeiten von Werkstücken wie Kurbelwellen oder Nockenwellen deutlich reduziert werden können, indem die Nebenzeiten verringert werden, also jene Zeiten, in welchen das Feinbearbeitungswerkzeug außer Eingriff mit der Werkstückumfangsfläche steht. Die erfindungsgemäße Vorrichtung ermöglicht eine erhebliche Reduzierung dieser Nebenzeiten; insbesondere ist es nach Abschluss einer Bearbeitungsphase einer Werkstückumfangsfläche nicht erforderlich, das Werkstück so zu verdrehen, dass die Werkstückumfangsfläche eine bestimmte, für eine herkömmliche Feinbearbeitungsvorrichtung geeignete Position entlang der Kreisbahn um die Werkstückachse einnimmt. Vielmehr kann unabhängig von der Position der Werkstückumfangsfläche entlang der Kreisbahn die Andrückeinrichtung in eine Wunschposition verbracht werden. Nach Abschluss einer Bearbeitungsphase kann die Andrückeinrichtung unabhängig von der aktuellen Lage der Werkstückumfangsfläche entlang der Kreisbahn um die Werkstückachse von dem Werkstück entfernt werden.

Bei einer bevorzugten Ausführungsform der Erfindung ist vorgesehen, dass die erste Bewegungsbahn und die zweite Bewegungsbahn zueinander im Wesentlichen senkrecht verlaufen. Auf diese Weise können die Stellwege des ersten Antriebs und des zweiten Antriebs verkürzt werden.

Es ist bevorzugt, dass zumindest eine der Bewegungsbahnen geradlinig ist. Dies ermöglicht die Verwendung eines relativ einfachen und dennoch hochgenauen Linearantriebs, beispielsweise eines pneumatischen oder hydraulischen Antriebs.

Ferner ist es bevorzugt, wenn zumindest eine der Bewegungsbahnen kreisbogenförmig ist. In diesem Zusammenhang ist es ferner bevorzugt, dass die Bewegung des Wirkbereichs Andrückeinrichtung entlang der kreisbogenförmigen Bewegungsbahn mit einem Verschwenken der Andrückeinrichtung um eine Schwenkachse einhergeht. Dies ermöglicht eine kompakte und stabile Führung der Andrückeinrichtung entlang einer der Bewegungsbahnen.

Erfindungsgemäß ist eine schaltbare Verbindungseinrichtung zum Herstellen und Unterbrechen einer Wirkverbindung zwischen dem ersten Antrieb und der Andrückeinrichtung und/oder zwischen dem zweiten Antrieb und der Andrückeinrichtung vorgesehen. Dies hat den Vorteil, dass bei einer Drehung des Werkstücks um die Werkstückachse mittels einer Drehantriebseinrichtung die Antriebe der Antriebseinrichtung nicht mit der Andrückeinrichtung zwangsgekoppelt sind. Hierdurch kann gegebenenfalls eine Entlastung der Antriebe der Antriebseinrichtung und/oder eine Verbesserung der Bearbeitungsgenauigkeit erzielt werden.

Bei einer weiteren Ausführungsform der Erfindung ist eine von dem ersten Antrieb und dem zweiten Antrieb unabhängige Halteeinrichtung zum Halten der Andrückeinrichtung in einer mittels der Antriebe vorgebbaren Position des Wirkbereichs der Andrückeinrichtung vorgesehen. Die Halteeinrichtung kann beispielsweise in Form einer Bremseinrichtung ausgebildet sein und ermöglicht es, den Wirkbereich der Andrückeinrichtung in einer vorgebbaren Position zu halten, ohne das beispielsweise gewichtsbedingte Kräfte auf die Antriebe wirken.

Ferner ist es bevorzugt, wenn eine Lagereinrichtung zur Lagerung der Andrückeinrichtung an einem Gestell vorgesehen ist. Die Lagereinrichtung ermöglicht die Führung der Andrückeinrichtung innerhalb der senkrecht zu der Werkstückachse verlaufenden Bewegungsebene der Antriebseinrichtung.

Vorzugsweise umfasst die Lagereinrichtung ein Schublager und ein Schwenklager. Dies ermöglicht eine einfache, kompakte und stabile Lagerung der Andrückeinrichtung.

Eine weitere vorteilhafte Ausführungsform der Erfindung umfasst eine Kraftbeaufschlagungseinrichtung, welche auf ein sich zwischen zwei Umkehrlagen hin- und her bewegen des Lagerteil der Lagereinrichtung Brems- und/oder Beschleunigungskräfte ausübt. Eine solche Kraftbeaufschlagungseinrichtung ermöglicht einen Ausgleich trägheitsbedingter Massenkräfte. Ausgestaltungen einer solchen Kraftbeaufschlagungseinrichtung sind in der europäischen Patentanmeldung Nr. 12152051.4 derselben Anmelderin, angemeldet am 23.01.2012, beschrieben. Hinsichtlich des Aufbaus und der Funktionsweise der Kraftbeaufschlagungseinrichtung wird hiermit auf die vorstehend genannte europäische Patentanmeldung Bezug genommen.

In vorteilhafter Weise handelt es sich bei dem Feinbearbeitungswerkzeug um ein Finishwerkzeug zur finishenden Bearbeitung der Werkstückumfangsfläche. Bei dem Finishwerkzeug handelt es sich beispielsweise um ein Finishband, welches mittels des Wirkbereichs der Andrückeinrichtung gegen die Werkstückumfangsfläche angedrückt wird. Bei dem Finishwerkzeug kann es sich auch um einen Finishstein handeln, welcher mittels der Andrückeinrichtung gegen die Werkstückumfangsfläche gedrückt wird.

Für den Fall, dass es sich bei dem Feinbearbeitungswerkzeug um ein Finishwerkzeug handelt, ist es bevorzugt, dass ein Oszillationsantrieb zur Beaufschlagung des Werkstücks mit einer zur Werkstückachse parallelen Oszillationsbewegung vorgesehen ist. Ein solcher Oszillationsantrieb ermöglicht in Verbindung mit einer Drehung der zu bearbeitenden Werkstückoberfläche eine für eine Finishbearbeitung charakteristische Kreuzschliffstruktur.

Gemäß einer Ausführungsform der Erfindung ist eine Drehantriebseinrichtung zum Drehen des Werkstücks vorgesehen. Eine solche Drehantriebseinrichtung umfasst beispielsweise einen Spindelstock und einen Reitstock.

Im Rahmen eines erfindungsgemäßen Verfahrens zum Betrieb einer vorstehend beschriebenen Vorrichtung ist es möglich, dass zum Drehen des Werkstücks ausschließlich die vorstehend genannte Drehantriebseinrichtung verwendet wird und dass der erste Antrieb und der zweite Antrieb der Antriebseinrichtung inaktiv sind. Hierbei ist vorgesehen, dass während einer Bearbeitung der Werkstückumfangsfläche beide Antriebe nicht in Wirkverbindung mit der Andrückeinrichtung stehen, unter Verwendung mindestens einer vorstehend genannten, schaltbaren Verbindungseinrichtung. Ferner ist es bei einer Bearbeitung einer Werkstückumfangsfläche unter Verwendung einer Drehantriebseinrichtung bevorzugt, wenn eine ebenfalls vorstehend beschriebene Kraftbeaufschlagungseinrichtung vorgesehen ist, welche einen Ausgleich trägheitsbedingter Massenkräfte ermöglicht.

Bei einem weiteren Verfahren zum Betrieb einer vorstehend beschriebenen Vorrichtung wird die Drehantriebseinrichtung zum Drehen des Werkstücks verwendet, sodass die Werkstückumfangsfläche entlang einer Kreisbahn um die Werkstückachse bewegt wird. Gleichzeitig werden jedoch auch der erste Antrieb und/oder zweite Antrieb derart angesteuert, dass der Wirkbereich der Andrückeinrichtung entlang derselben Kreisbahn um die Werkstückachse bewegt wird. Dies hat den Vorteil, dass die Andrückeinrichtung nicht aufgrund der Drehbewegung des Werkstücks passiv mitbewegt wird, sondern aktiv eine identische Bewegung ausführt. Ein solches Verfahren kann auch als "aktiver Massenausgleich" bezeichnet werden und ermöglicht insbesondere den Verzicht auf eine vorstehend genannte Kraftbeaufschlagung zum Ausgleich trägheitsbedingter Massenkräfte.

Nach einem weiteren erfindungsgemäßen Verfahren zum Betrieb einer vorstehend beschriebenen Vorrichtung wird zum Drehen des Werkstücks um die Werkstückachse ausschließlich der erste Antrieb und/oder zweite Antrieb verwendet, also keine vorstehend genannte Drehantriebseinrichtung. Hierbei wird eine Bewegung des ersten Antriebs und/oder des zweiten Antriebs über die Andrückeinrichtung auf die Werkstückumfangsfläche übertragen und die Werkstücksumfangsfläche um die Werkstückachse verdreht. Hierbei kann eine vorstehend genannte Drehantriebseinrichtung zwar vorhanden sein; diese bleibt jedoch inaktiv. Dementsprechend ist es auch möglich, dass eine vorstehend genannte Drehantriebseinrichtung nicht vorhanden ist.

Wenn die Drehung der zu bearbeitenden Werkstückumfangsfläche um die Werkstückachse ausschließlich mittels des ersten Antriebs und/oder mittels des zweiten Antriebs erfolgt, ist es möglich, einen Radius und/oder einen Rotationsmittelpunkt einer Kreisbahn eines Wirkbereichs der Andrückeinrichtung einzustellen und/oder während der Bewegung des Wirkbereichs der Andrückeinrichtung zu variieren. Es kann also bewusst von einer Kreisbahn abgewichen werden, welche die Werkstückumfangsfläche im Zuge einer Drehung um die Werkstückachse beschreibt. Durch die gezielte Abweichung von einer solchen Kreisbahn ist es möglich, die Exzentrizität und/oder den Rundlauf der Werkstückumfangsfläche zu beeinflussen.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Fig. 1: eine perspektivische Darstellung einer Ausführungsform einer Vorrichtung zur finishenden Feinbearbeitung eines Werkstücks;
- Fig. 2: eine Draufsicht der Vorrichtung gemäß Fig. 1;
- Fig. 3: eine Seitenansicht der Vorrichtung gemäß Fig. 1 zum Abschluss einer Hauptzeitbearbeitungsphase einer Werkstücksumfangsfläche eines Werkstücks;
- Fig. 4: eine der Fig. 3 entsprechende Seitenansicht in einer ersten Nebenzeitphase;
- Fig. 5: einen in Fig. 4 mit V bezeichneten Ausschnitt in vergrößerter Darstellung;
- Fig. 6: eine der Fig. 3 entsprechende Seitenansicht in einer zweiten Nebenzeitphase;
- Fig. 7: eine der Fig. 3 entsprechende Seitenansicht in einer dritten Nebenzeitphase;
- Fig. 8: eine der Fig. 3 entsprechende Seitenansicht in einer vierten Nebenzeitphase;
- Fig. 9: eine der Fig. 3 entsprechende Seitenansicht in einer abschließenden Nebenzeitphase; und
- Fig. 10: einen in Fig. 9 mit X bezeichneten Ausschnitt in vergrößerter Darstellung.

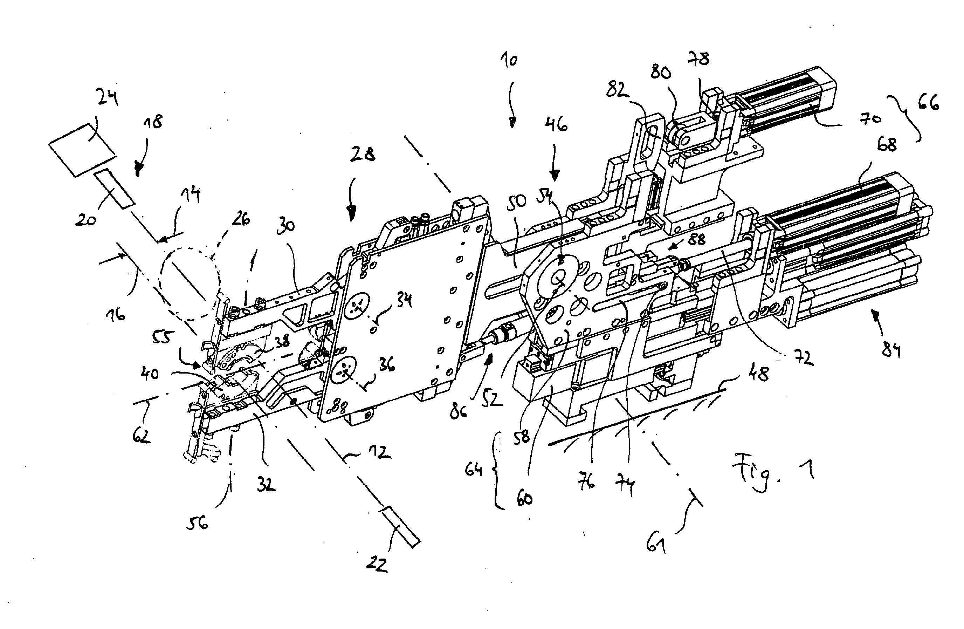

Eine Ausführungsform einer Vorrichtung zur finishenden Feinbearbeitung eines Werkstücks in Form einer Kurbelwelle oder einer Nockenwelle ist in der Zeichnung insgesamt mit dem Bezugszeichen 10 bezeichnet. Das zu bearbeitende Werkstück ist in Figur 1 aus Übersichtsgründen nicht dargestellt. Bei dem Werkstück handelt es sich vorzugsweise um eine Kurbelwelle oder eine Nockenwelle. Das Werkstück weist eine Werkstückachse 12 auf, welche zentrisch zu Hauptlagern des Werkstücks verläuft. Das Werkstück weist ferner Hublager auf, welche um einen Hub 14 zur Werkstückachse 12 versetzt sind. Eine Hublagerachse, welche zentrisch zu einer zu bearbeitenden Werkstückumfangsfläche verläuft, ist in Figur 1 mit dem Bezugszeichen 16 bezeichnet.

Zur Drehung des Werkstücks um die Werkstückachse 12 kann eine Drehantriebseinrichtung 18 vorgesehen sein, welche beispielsweise einen schematisch dargestellten Spindelstock 20 und einen Reitstock 22 umfasst.

Das Werkstück oder ein Verbund aus Werkstück und Drehantriebseinrichtung 18 ist bei einer bevorzugten Ausführungsform mittels eines Oszillationsantriebs 24 in einer zu der Werkstückachse 12 parallelen Richtung mit einer Oszillationsbewegung (also einer Hin- und Herbewegung) beaufschlagbar. Hierfür ist es denkbar, die Drehantriebseinrichtung 18 auf einem (nicht dargestellten) Schlitten anzuordnen, welcher dann mittels des Oszillationsantriebs 24 in eine Oszillationsbewegung versetzt wird.

Während der Drehung des Werkstücks um die Werkstückachse 14 beschreibt die zu bearbeitende Werkstückumfangsfläche eine in Figur 1 angedeutete, zu der Werkstückachse 12 konzentrische Kreisbahn 26.

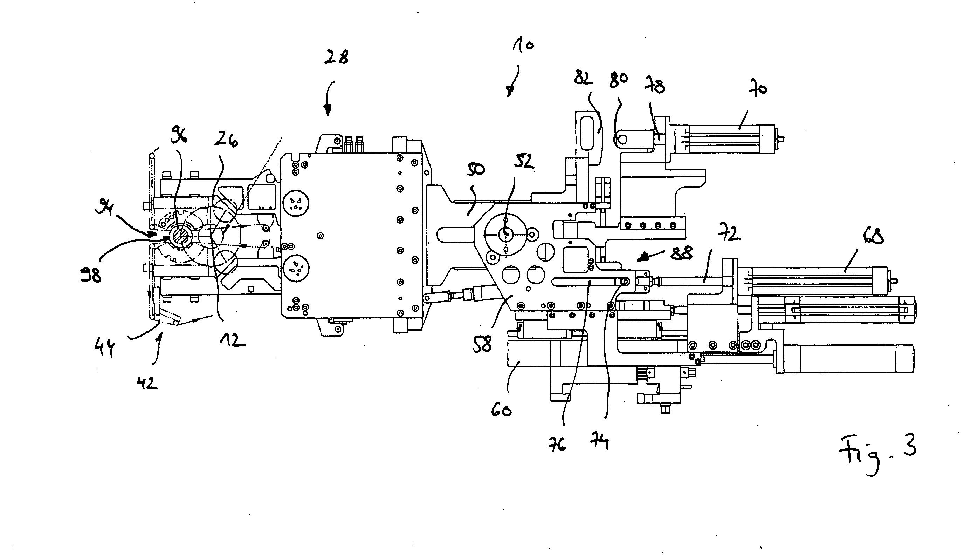

Die Vorrichtung 10 umfasst eine insgesamt mit dem Bezugszeichen 28 bezeichnete Andrückeinrichtung. Die Andrückeinrichtung 28 umfasst Andrückarme 30 und 32, welche jeweils um Andrückarmschwenkachsen 34, 36 verschwenkbar sind. Die Andrückarme 30, 32 weisen jeweils schalenförmige Andrückelemente 38, 40 auf, welche zum Andrücken eines Feinbearbeitungswerkzeugs 42, insbesondere in Form eines Finishbands 44 (vergleiche Figur 3) dienen.

Die Andrückeinrichtung 28 ist mittels einer insgesamt mit dem Bezugszeichen 46 bezeichneten Lagereinrichtung an einem ortsfesten Gestell 48 gelagert.

Die Lagereinrichtung 46 umfasst einen Schwenkarm 50, welcher mit der Andrückeinrichtung 28 verbunden ist und um eine Schwenkachse 52 eines Schwenklagers 54 verschwenkbar ist. Bei einem Verschwenken des Schwenkarms 50 um die Schwenkachse 52 bewegt sich ein Wirkbereich 55 der Andrückeinrichtung 28 entlang einer gekrümmten Bewegungsbahn 56, welche im Wesentlichen in bezogen auf die Schwerkraftrichtung vertikaler Richtung verläuft.

Das Schwenklager 54 ist an einem Schlitten 58 angeordnet, welcher relativ zu einem gestellfesten Schlittenträger 60 verschiebbar ist. Der Schlittenträger 60 ist vorzugsweise längs einer parallel zu der Werkstückachse 12 verlaufenden Schlittenträgerachse 61 entlang des Gestells 48 verschiebbar und an dem Gestell 48 fixierbar.

Bei einem Verschieben des Schlittens 58 relativ zu dem Schlittenträger 60 bewegt sich die Andrückeinrichtung 28 und dessen Wirkbereich 55 längs einer Bewegungsbahn 62, welche insbesondere geradlinig ist und bezogen auf die Schwerkraftrichtung insbesondere in horizontaler oder vertikaler Richtung oder unter einem Winkel hierzu verläuft.

Die Bewegungsbahnen 56 und 62 spannen eine Bewegungsebene des Wirkbereichs 55 der Andrückeinrichtung 28 auf, die senkrecht zu der Werkstückachse 12 verläuft.

Der Schlitten 58 und der Schlittenträger 60 bilden gemeinsam ein Linearlager 64 der Lagereinrichtung 46. Mittels des Linearlagers 64 und des Schwenklagers 54 der Lagereinrichtung 46 ist gewährleistet, dass bei Antrieb eines Werkstücks um die Werkstückachse 12 mittels der Drehantriebseinrichtung 18 der Wirkbereich der Andrückeinrichtung 28 der Kreisbahn 26 der zu bearbeitenden Werkstückumfangsfläche passiv folgen kann.

Die Vorrichtung 10 umfasst eine nachfolgend beschriebene Antriebseinrichtung 66 mit einem ersten Antrieb 68 und mit einem zweiten Antrieb 70.

Der erste Antrieb 68 umfasst einen Antriebskolben 72, welcher endseitig mit einem Antriebselement 74 verbunden ist. Das Antriebselement 74 taucht in eine Nut 76 des Schlittens 58 ein. In Figur 1 ist der Schlitten 58 in seiner vorderen Maximalposition dargestellt, in welcher das Antriebselement 74 an dem bezogen auf die Andrückeinrichtung 28 hinteren Nutgrund der Nut 76 anliegt. In der vorderen Maximalposition des Schlittens 58 steht der Wirkbereich 55 der Andrückeinrichtung 28 in einer "Drei-Uhr-Position" der Kreisbahn 26 des Werkstücks.

Der erste Antrieb 68 ist beispielsweise mit dem Schlittenträger 60 verbunden. Der zweite Antrieb 70 ist beispielsweise mit dem Schwenkarm 50 der Lagereinrichtung 46 verbunden.

Der zweite Antrieb 70 weist einen Antriebskolben 78 auf, welcher mit einem Antriebselement 80 in Form einer Antriebsrolle verbunden ist. Die Antriebsrolle 80 ist dazu vorgesehen, mit einer Kurvenscheibe 82 zusammenzuwirken. Die Kurvenscheibe 82 ist vorzugsweise mit dem Schlitten 58 verbunden.

Die Vorrichtung 10 umfasst ferner eine Kraftbeaufschlagungseinrichtung 84, welche im Zuge einer Bewegung des Schlittens 58 parallel zu der Bewegungsbahn 62 Brems- und/oder Beschleunigungskräfte ausübt, um trägheitsbedingte Massenkräfte von Teilen der Vorrichtung 10 zu reduzieren, die während der Bearbeitung einer Werkstückumfangsfläche eines Werkstücks entlang oder parallel zu der Bewegungsbahn 62 bewegt werden.

Eine weitere Kraftbeaufschlagungseinrichtung 86 übt Brems- und/oder Beschleunigungskräfte auf Teile der Vorrichtung 10 auf, welche im Zuge der Feinbearbeitung einer Werkstückumfangsfläche des Werkstücks in Entsprechung der Bewegungsbahn 56 hin- und her verschwenkt werden.

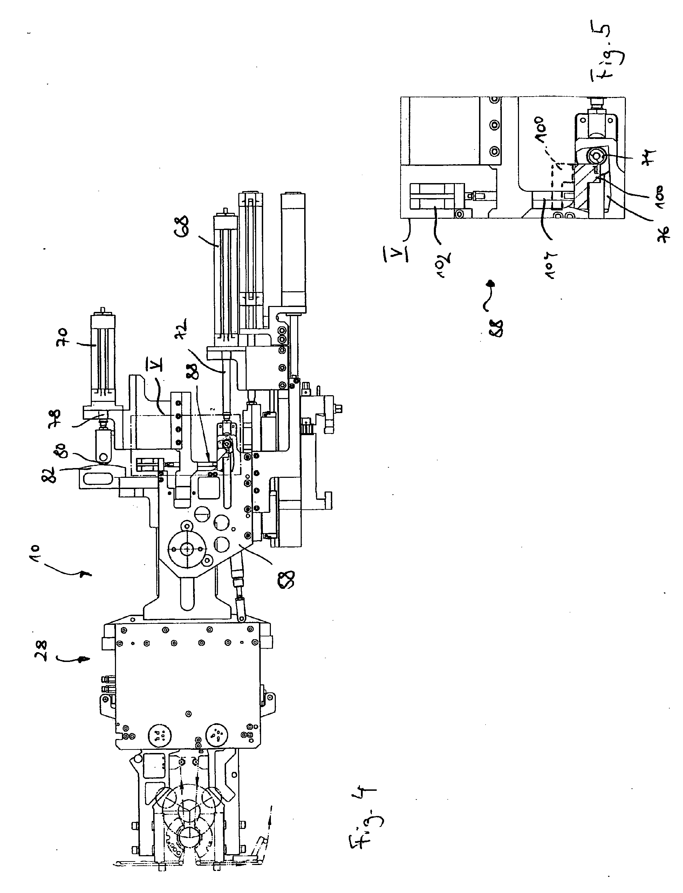

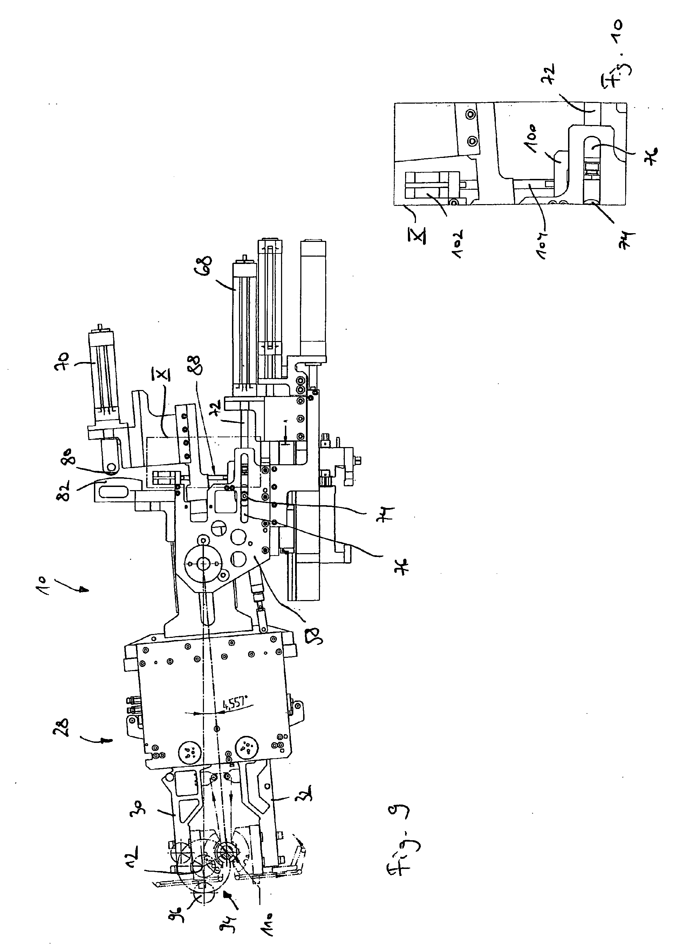

Die Vorrichtung 10 umfasst ferner eine Verbindungseinrichtung 88, deren Aufbau und Funktion insbesondere durch Bezugnahme auf Figuren 5 und 10 beschrieben ist. Die Verbindungseinrichtung 88 dient dazu, eine Wirkverbindung zwischen dem ersten Antrieb 68 und dem Schlitten 58 und der Andrückeinrichtung 28 herstellen oder unterbrechen zu können.

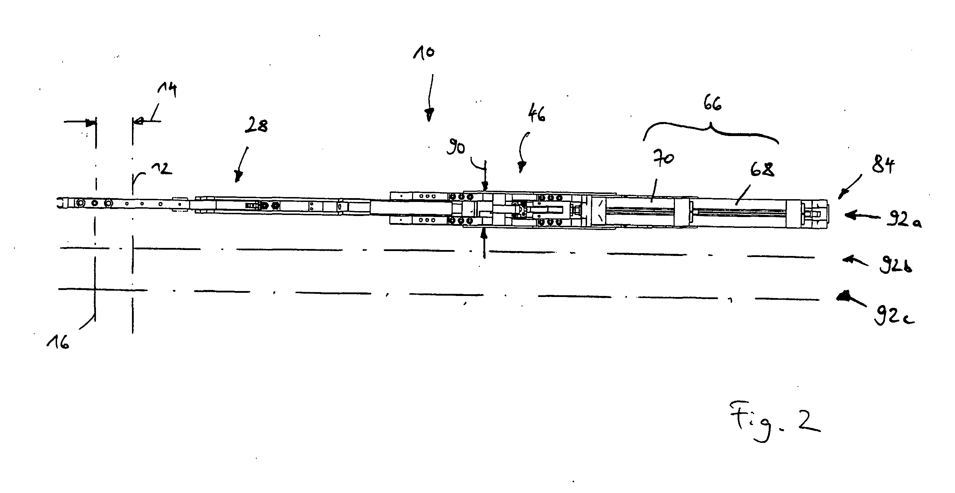

Die Bauteile der Vorrichtung 10, insbesondere die Andrückeinrichtung 28, die Lagereinrichtung 46 und die Antriebe 68 und 70 sind zueinander versetzt angeordnet, sodass ein besonders schlanker, auch in Figur 2 dargestellter Aufbau entsteht. Beispielsweise beträgt eine parallel zu der Werkstückachse 12 gemessene Breite ("Kassettenbreite") 90 eines Kassettenaufbaus 92 lediglich zwischen 32 mm und 40 mm. Dies ermöglicht den Einsatz einer Mehrzahl von Kassettenaufbauten 92, welche parallel zueinander angeordnet sind, was in Figur 2 schematisch anhand der Bezugszeichen 92a, 92b und 92 c dargestellt ist. Der Abstand zwischen den jeweiligen Kassetten 92 entspricht dem Abstand der gleichzeitig zu bearbeitenden Werkstückumfangsflächen eines Werkstücks.

In Figur 3 ist ein Abschnitt eines Werkstücks 94, insbesondere einer Kurbelwelle, dargestellt. Bei dem dargestellten Abschnitt handelt es sich um ein Hublager 96 mit einer Werkstückumfangsfläche 98.

Während der Bearbeitung der Werkstückumfangsfläche 98 mittels des Finishbands 44 rotiert das Hublager 96 entlang der Kreisbahn 26 um die Werkstückachse 12. Hierbei wird der Wirkbereich der Andrückeinrichtung 28, der Bewegung des Hublagers 96 passiv folgend, ebenfalls entlang der Kreisbahn 26 bewegt. Diese Bewegung setzt sich zusammen aus einer Schwenkbewegung des Schwenkarms 50 um die Schwenkachse 52 und einer Schubbewegung des Schlittens 58 relativ zu dem Schlittenträger 60.

Für das beschriebene Beispiel eines konventionellen Antriebs des Werkstücks 12 mittels der Drehantriebseinrichtung 18 sind die Antriebe 68 und 70 deaktiviert. Eine Deaktivierung des ersten Antriebs 68 erfolgt durch Schalten der Verbindungseinrichtung 88, sodass diese von der Antriebseinrichtung 68 entkoppelt ist. Im Zuge der Entkopplung ist das Antriebselement 74 frei innerhalb der Nut 76 des Schlittens 58 bewegbar. Eine Schubbewegung des Schlittens 58 wird auf diese Weise nicht auf den Antriebskolben 72 des ersten Antriebs 68 übertragen.

Die Entkopplung des zweiten Antriebs 70 von der Andrückeinrichtung 28 erfolgt dadurch, dass der Antriebskolben 78 eingefahren und das Antriebselement 80 von der Kurvenscheibe 82 abgehoben wird.

Ausgehend von dem in Figur 3 dargestellten Zustand, welcher dem Abschluss einer Hauptbearbeitungsphase der Werkstückumfangsfläche 98 des Hublagers 96 entspricht, werden zur Vorbereitung einer weiteren Hauptzeitbearbeitungsphase die nachfolgend unter Bezugnahme auf die Figuren 4 bis 10 beschriebenen Nebenzeitphasen durchlaufen.

In einer ersten Nebenzeitphase, welche in Figur 3 dargestellt ist, wird der zweite Antrieb 70 so angesteuert, dass der Antriebskolben 78 das Antriebselement 80 in Richtung Andrückeinrichtung 28 bewegt, bis das Antriebselement 80 in Anlage mit der Kurvenscheibe 82 gelangt.

Zusätzlich wird die Verbindungseinrichtung 88 so geschaltet, dass zwischen dem Antriebselement 74 des ersten Antriebs 68 und dem Schlitten 58 eine Wirkverbindung hergestellt wird. Hierfür weist die Verbindungseinrichtung 88 ein Verriegelungselement 100 auf (vergleiche Figur 5), welches aus einer in Figur 5 gestrichelt dargestellten, entriegelten Freigabeposition in eine in Figur 5 mit durchgezogenen Linien dargestellte Verriegelungsposition bewegbar ist. Hierfür weist die Verbindungseinrichtung 88 einen Verriegelungsantrieb 102 auf, welche über eine Antriebsstange 104 mit dem Verriegelungselement 100 zusammenwirkt. In der Verriegelungsposition des Verriegelungselements 100 ist das Antriebselement 74 zwischen einer rückwärtigen Wandung der Nut 76 des Schlittens 58 und dem Verriegelungselement 100 gefangen.

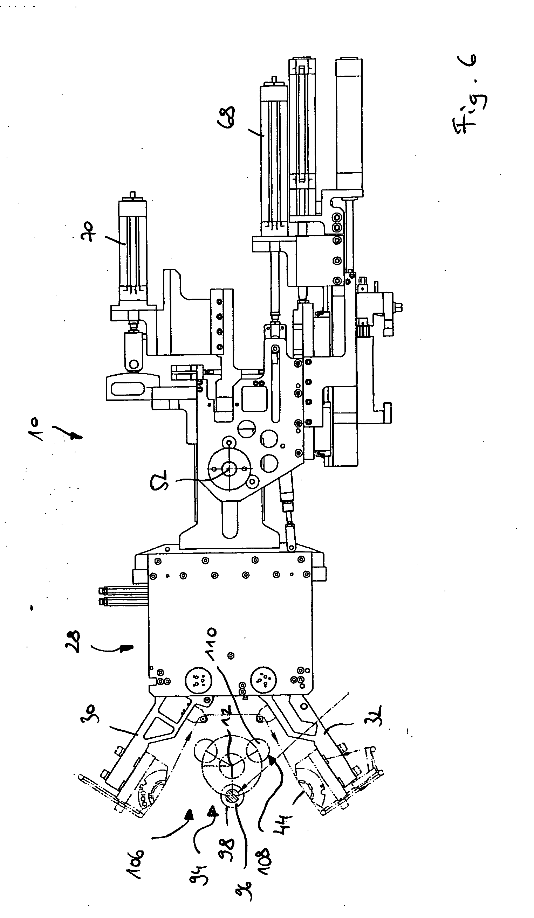

In einer folgenden zweiten Nebenzeitphase, welche in Fig. 6 dargestellt ist, wird die Andrückeinrichtung 28 betätigt, sodass die Andrückarme 30 und 32 in an sich bekannter und daher nicht näher erläuterter Art und Weise geöffnet werden können und das Finishband 44 außer Eingriff mit der Werkstückumfangsfläche 98 gebracht wird. Die Andrückarme 30 und 32 werden soweit geöffnet, dass ein Freiraum 106 entsteht, welcher größer ist als eine Hüllfläche des rotierenden Werkstücks 94 und vorzugsweise auch größer als die Außenabmessungen eines Spindelstocks 20 und/oder eines Reitstocks 22. Wenn der geschaffene Freiraum 106 nicht ausreicht, um das Werkstück entlang seiner Werkzeugachse 12 herausfahren zu können, so erweist es sich als vorteilhaft, wenn die Andrückeinrichtung 28 quer zur Werkstückachse 12 zurückziehbar ist, so dass sie von der Hüllfläche des Werkstücks 94 freikommt.

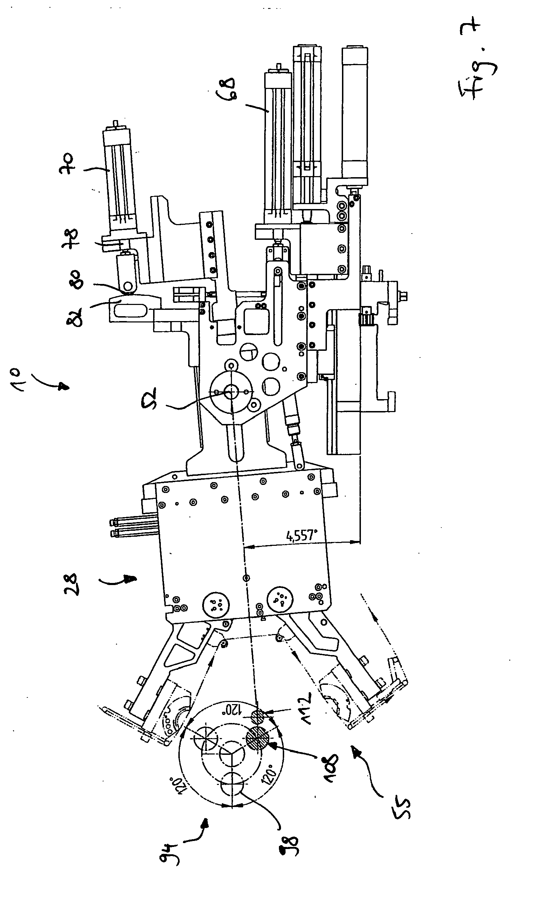

In Figur 6 ist eine weitere Werkstückumfangsfläche des Werkstücks 94 mit dem Bezugszeichen 108 bezeichnet. Die Werkstückumfangsfläche 108 bildet die radial äußere Begrenzung eines weiteren Hublagers 110 des Werkstücks 94. Die Hublager 96 und 110 des Werkstücks 94 sind bezogen auf die Werkstückachse 12 relativ zueinander winkelversetzt, beispielsweise um einen Winkel von 120°, vergleiche auch Figur 7. Wenn ausgehend aus der in Figur 3 dargestellten Drehlage des Werkstücks 94nach Abschluss einer Finishbearbeitung des Hublagers 96 in einer folgenden Hauptzeitbearbeitungsphase die Werkstückumfangsfläche 108 des Hublagers 110 bearbeitet werden soll, ist es vorteilhaft, wenn das Werkstück 94 in seiner Drehlage um die Werkstückachse 12 verbleiben kann und lediglich die Andrückeinrichtung 28 mittels der Antriebseinrichtung 66 bewegt wird. Dies trifft besonders zu, wenn mehrere Kassetten 92a, 92b, 92c eingesetzt werden.

Ausgehend von der in Figur 6 dargestellten Lage der Andrückeinrichtung 28 wird in einer dritten Nebenzeitphase, welche in Fig. 7 dargestellt ist, der erste Antrieb 68 so angesteuert, dass die Andrückeinrichtung 28 entlang der Bewegungsbahn 62 (vergleiche Figur 1) vom Werkstück 94 weg in eine hintere Maximalposition verschoben wird. Hierdurch nimmt ein Wirkmittelpunkt 112 des Wirkbereichs 55 eine hintere Maximalposition ein. Der Wirkmittelpunkt 112 ist bei geschlossenen Zangenarmen 30 und 32 zumindest ungefähr deckungsgleich mit einer Hublagerachse 16 einer zu bearbeitenden Werkstückumfangsfläche 98, 108.

Zusätzlich zu der vorstehend beschriebenen Verschiebung wird die Andrückeinrichtung 28 auch um die Schwenkachse 52 verschwenkt. Diese Verschwenkbewegung wird durch den zweiten Antrieb 70 gesteuert. Beispielsweise kann die Andrückeinrichtung 28, wie aus den Figuren 6 und 7 ersichtlich, ausgehend von der in Figur 6 dargestellten Schwenklage nach unten in die in Figur 7 dargestellte Schwenklage verschwenkt werden. Hierfür wird der Antriebskolben 78 des zweiten Antriebs 70 eingezogen, so dass die bezogen auf die Schwenkachse 52 kopflastige Andrückeinrichtung 28 um die Schwenkachse 52 nach unten verschwenkt. Hierbei wälzt das Antriebselement 80 des zweiten Antriebs 70 auf der Kurvenscheibe 82 ab.

Das Verschwenken der Andrückeinrichtung 28 erfolgt vorzugsweise in der hinteren Maximalposition des ersten Antriebs 68, in welcher die Andrückeinrichtung 28 und dessen Wirkmittelpunkt 112 also maximal von dem Werkstück 94 entfernt positioniert sind.

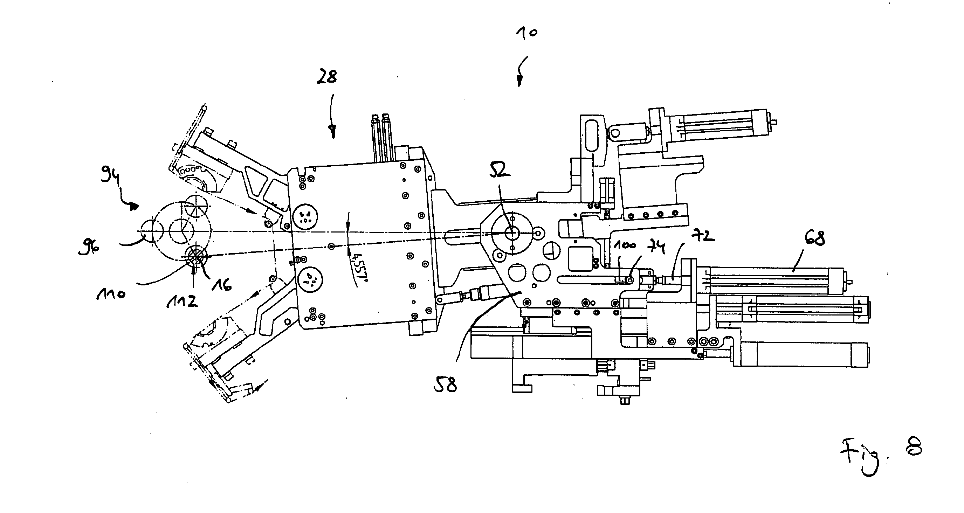

Zur Vorbereitung einer Bearbeitung der Werkstückumfangsfläche 108 des Hublagers 110 ist es erforderlich, die Position des Wirkmittelpunkts 112 Andrückeinrichtung 28 entlang der Bewegungsbahn 62 einzustellen. Hierfür wird in einer in Fig. 8 dargestellten, vierten Nebenzeitphase der Antriebskolben 72 ausgefahren, sodass das Antriebselement 74 über das Verriegelungselement 100 den Schlitten 58 und somit auch die Andrückeinrichtung 28 in ihrem um die Schwenkachse 52 verschwenkten Zustand so verschiebt, dass der in Figur 7 dargestellte Wirkmittelpunkt 112 in Deckungslage mit der Hublagerachse 16 des Hublagers 110 gelangt.

Ausgehend von dem in Figur 8 dargestellten Zustand werden in einer in Fig. 9 dargestellten, abschließenden Nebenzeitphase die Zangenarme 30 und 32 der Andrückeinrichtung 28 geschlossen und ein Kraft- und Formschluss zwischen den Andrückelementen 38, 40, dem Finishband 44 und der Werkstückumfangsfläche 108 des Hublagers 110 hergestellt. Nach Schließen der Andrückarme 30, 32 wird der zweiten Antrieb 70 so betätigt, dass das Antriebselement 80 außer Kontakt mit der Kurvenscheibe 82 gelangt. Außerdem wird die Verbindungseinrichtung 88 so geschaltet, dass eine Verriegelung zwischen dem Schlitten 58 und dem ersten Antrieb 68 aufgehoben wird. Hierfür wird das Verriegelungselement 100 ausgehend aus der in Figur 8 dargestellten Verriegelungsposition in die in Figuren 9 und 10 dargestellte Freigabeposition gebracht. Hierdurch wird das Antriebselement 74 des ersten Antriebs 68 freigegeben, sodass sich das Antriebselement 74 frei innerhalb der Nut 76 des Schlittens 58 bewegen kann. Abschließend wird das Antriebselement 74 durch Ausfahren des Antriebskolbens 72 mittels des ersten Antriebs 68 in Richtung Werkstück 94 verschoben, sodass das Antriebselement 74 in Richtung vorderes Ende der Nut 76 des Schlittens 58 verfahren wird.

Anschließend kann die Werkstückumfangsfläche 108 des Hublagers 110 während einer Hauptzeitbearbeitungsphase bearbeitet werden.

Während der Hauptzeitbearbeitung eines Hublagers 96, 110 des Werkstücks 94 ist es möglich, zusätzlich oder alternativ zu der Drehantriebseinrichtung 18 auch die Antriebseinrichtung 66 zu verwenden. Es versteht sich, dass ein Antrieb 68, 70 der Antriebseinrichtung 66, welche zur Erzeugung einer Bewegung der Andrückeinrichtung 68 verwendet werden soll, in Wirkverbindung mit der

Andrückeinrichtung 28 stehen muss, also beispielsweise bei Verwendung des ersten Antriebs 68 die Verbindungseinrichtung 88 eine Wirkverbindung zwischen dem ersten Antrieb 68 und dem Schlitten 58 herstellt. Bei Verwendung des zweiten Antriebs 70 muss das Antriebselement 80 an der Kurvenscheibe 82 anliegen.

Die Verwendung der Antriebe 68 und/oder 70 ermöglicht ein Mitführen der Andrückeinrichtung 28, und zwar der Drehbewegung der Drehantriebseinrichtung 18 überlagert.

Alternativ hierzu wird lediglich die Antriebseinrichtung 66 verwendet, so dass ein werkzeugseitiger Drehantrieb für das Werkstück 94 bereitgestellt ist und eine Drehantriebseinrichtung 18 deaktiviert bleiben kann oder ganz entfallen kann. Hierfür wäre es zweckmäßig, dass der Antrieb 70 derart angekoppelt ist, dass er Zug- und Druckkräfte übertragen kann.

## Patentansprüche

1. Vorrichtung (10) zur Feinbearbeitung einer bezogen auf eine Werkstückachse (12) eines Werkstücks (94) exzentrisch angeordneten Werkstückumfangsfläche (98), insbesondere eines Hublagers (96) einer Kurbelwelle oder einer Nockenwelle, mit einer Andrückeinrichtung (28) zum Andrücken eines Feinbearbeitungswerkzeugs (42) gegen die Werkstückumfangsfläche, wobei eine Antriebseinrichtung (66) vorgesehen ist, mittels welcher ein Wirkbereich der Andrückeinrichtung (28) antreibbar ist, wobei der Wirkbereich der Andrückeinrichtung (28) mittels eines ersten Antriebs (68) entlang einer ersten Bewegungsbahn (62) und mittels eines zweiten Antriebs (70) entlang einer zu der ersten Bewegungsbahn (62) winkligen zweiten Bewegungsbahn (56) antreibbar ist, wobei die erste Bewegungsbahn (62) und die zweite Bewegungsbahn (56) eine quer zu der Werkstückachse (12) verlaufende Bewegungsebene aufspannen, **dadurch gekennzeichnet, dass** die Andrückeinrichtung (28) schalenförmige Andrückelemente (38, 40) zum Andrücken des Feinbearbeitungswerkzeugs (42) aufweist, und dass eine schaltbare Verbindungseinrichtung (88) zum Herstellen und Unterbrechen einer Wirkverbindung zwischen dem ersten Antrieb (68) und der Andrückeinrichtung (28) und/oder zwischen dem zweiten Antrieb (70) und der Andrückeinrichtung (28) vorgesehen ist.

2. Vorrichtung (10) nach Anspruch 1, **dadurch gekennzeichnet, dass** die erste Bewegungsbahn (62) und die zweite Bewegungsbahn (56) zueinander im Wesentlichen senkrecht verlaufen.

3. Vorrichtung (10) nach einem der voranstehenden Ansprüche, **dadurch gekennzeichnet, dass** zumindest eine der Bewegungsbahnen (56) geradlinig ist.

4. Vorrichtung (10) nach einem der voranstehenden Ansprüche, **dadurch gekennzeichnet, dass** zumindest eine der Bewegungsbahnen (62) kreisbogenförmig ist.

5. Vorrichtung (10) nach einem der voranstehenden Ansprüche, **dadurch gekennzeichnet, dass** eine von dem ersten Antrieb (68) und dem zweiten Antrieb (70) unabhängige Halteeinrichtung zum Halten der Andrückeinrichtung in einer mittels der Antriebe vorgebbaren Position des Wirkbereichs der Andrückeinrichtung (28) vorgesehen ist.

6. Vorrichtung (10) nach einem der voranstehenden Ansprüche, **dadurch gekennzeichnet, dass** eine Lagereinrichtung (46) zur Lagerung der Andrückeinrichtung (28) an einem Gestell (48) vorgesehen ist.

7. Vorrichtung (10) nach Anspruch 6, **dadurch gekennzeichnet, dass** die Lagereinrichtung (46) ein Schublager (64) und ein Schwenklager (54) umfasst.

8. Vorrichtung (10) nach Anspruch 6 oder 7, **dadurch gekennzeichnet, dass** eine Kraftbeaufschlagungseinrichtung (84, 86) vorgesehen ist, welche auf ein sich zwischen zwei Umkehrlagen hin- und herbewegendes Lagerteil (50, 60) der Lagereinrichtung (46) Brems- und/oder Beschleunigungskräfte ausübt.

9. Vorrichtung (10) nach einem der voranstehenden Ansprüche, **dadurch gekennzeichnet, dass** das Feinbearbeitungswerkzeug (42) ein Finishwerkzeug (44) zur finishenden Bearbeitung der Werkstückumfangsfläche (98) ist.

10. Vorrichtung (10) nach einem der voranstehenden Ansprüche, **dadurch gekennzeichnet, dass** ein Oszillationsantrieb (24) zur Beaufschlagung des Werkstücks (94) mit einer zur Werkstückachse (12) parallelen Oszillationsbewegung vorgesehen ist.

11. Vorrichtung (10) nach einem der voranstehenden Ansprüche, **dadurch gekennzeichnet, dass** eine Drehantriebseinrichtung (18) zum Drehen des Werkstücks (94) um die Werkstückachse (12) vorgesehen ist.

12. Verfahren zum Betrieb einer Vorrichtung (10) nach Anspruch 11, **dadurch gekennzeichnet, dass** die Drehantriebseinrichtung (18) zum Drehen des Werkstücks (94) verwendet wird und dass der erste Antrieb (68) und der zweite Antrieb (70) inaktiv sind, wobei die Verbindungseinrichtung (88) so geschaltet wird, dass die Wirkverbindung zwischen dem ersten Antrieb (68) und der Andrückeinrichtung (28) und zwischen dem zweiten Antrieb (70) und der Andrückeinrichtung (28) unterbrochen ist.

13. Verfahren zum Betrieb einer Vorrichtung (10) nach einem der Ansprüche 1 bis 11, **dadurch gekennzeichnet, dass** zum Drehen des Werkstücks (94) um die Werkstückachse (12) ausschließlich der erste Antrieb (68) und/oder der zweite Antrieb (70) verwendet wird oder werden.

## Claims

1. Device (10) for precision processing of a workpiece circumference surface (98) arranged eccentrically in relation to a workpiece axis (12) of a workpiece (94), in particular a crank pin (96) of a crank shaft or a cam shaft, with a clamping means (28) for clamping a precision processing tool (42) against the workpiece circumference surface, whereby a drive means (66) is envisaged, with which a reach of efficacy of the clamping means (28) can be driven, whereby the reach of efficacy of the clamping means (28) can be driven by means of a first drive (68) along a first movement path (62) and by means of a second drive (70) along a second movement path (56) positioned at an angle from the first movement path (62), whereby the first movement path (62) and the second movement path (56) define a movement plane extending transverse to the workpiece axis (12), **characterised in that** the clamping means (28) comprises bowl-shaped clamping elements (38, 40) for clamping the precision processing tool (42), and **in that** a switchable connection means (88) for producing and interrupting an operating connection between the first drive (68) and the clamping means (28) and/or between the second drive (70) and the clamping means (28) is envisaged.

2. Device (10) according to claim 1, **characterised in that** the first movement path (62) and the second movement path (56) extend substantially vertical to each other.

3. Device (10) according to one of the preceding claims, **characterised in that** at least one of the movement paths (56) is straight.

4. Device (10) according to one of the preceding claims, **characterised in that** at least one of the movement paths (62) is curvilinear.

5. Device (10) according to one of the preceding claims, **characterised in that** an independent holding means for holding the clamping means in a position within the reach of efficacy of the clamping means (28), to be determined by means of the drive, is envisaged in one of the first drive (68) and the second drive (70).

6. Device (10) according to one of the preceding claims, **characterised in that** a bearing means (46) for mounting the clamping means (28) on a frame (48) is envisaged.

7. Device (10) according to claim 6, **characterised in that** the bearing means (46) comprises a thrust bearing (64) and a pivot bearing (54).

8. Device (10) according to claim 6 or 7, **characterised in that** a force application means (84, 86) is envisaged, which applies braking or acceleration forces to a bearing part (50, 60) moving reciprocally between two reverse layers of the bearing means (46).

9. Device (10) according to one of the preceding claims, **characterised in that** the precision processing tool (42) is a finishing tool (44) for the finishing processing of the workpiece circumference surface (98).

10. Device (10) according to one of the preceding claims, **characterised in that** an oscillating drive (24) for applying an oscillating movement that is parallel to the workpiece axis (12) to the workpiece (94) is envisaged.

11. Device (10) according to one of the preceding claims, **characterised in that** a rotary drive means (18) for rotating the workpiece (94) around the workpiece axis (12) is envisaged.

12. Method for operating a device (10) according to claim 11, **characterised in that** the rotary drive means (18) is used for rotating the workpiece (94), and **in that** the first drive (68) and the second drive (70) are inactive, whereby the connection means (88) is switched in such a way that the operating connection between the first drive (68) and the clamping means (28) and between the second drive (70) and the clamping means (28) is interrupted.

13. Method for operating a device (10) according to one of the claims 1 to 11, **characterised in that** only the first drive (68) and/or the second drive (70) is/are used for rotating the workpiece (94) around the workpiece axis (12).

## Revendications

1. Dispositif (10) pour un travail de précision d'une surface circonférentielle de pièce à usiner (98) disposée de manière excentrée par rapport à un axe de pièce à usiner (12) d'une pièce à usiner (94), en particulier un palier de levage (96) d'un vilebrequin ou d'un arbre à cames, ayant un dispositif de pression (28) pour presser un outil de travail de précision (42) contre la surface circonférentielle de la pièce à usiner, dans lequel un dispositif d'entraînement (66) est prévu, au moyen duquel une plage d'action du dispositif de pressage (28) peut être avancée, la plage d'action du dispositif de pression (28) pouvant être avancée au moyen d'un premier dispositif d'entraînement (68) le long d'un premier trajet de circulation(62) et au moyen d'un deuxième dispositif d'entraînement (70) le long d'un deuxième trajet de circulation (56) incliné par rapport au premier trajet de circulation (62), dans lequel le premier trajet de circulation (62) et le deuxième trajet de circulation (56) définissent un plan de circulation s'étendant transversalement par rapport à l'axe de pièce à usiner (12), **caractérisé en ce que** le dispositif de pression (28) comporte des éléments de pression de forme hémisphérique (38, 40) pour presser l'outil de finition (42), et **en ce qu'**un dispositif de liaison commutable (88) est prévu, pour établir et rompre une liaison fonctionnelle entre le premier dispositif d'entraînement (68) et le dispositif de pression (28) et/ou entre le deuxième dispositif d'entraînement (70) et le dispositif de pression (28).

2. Dispositif (10) selon la revendication 1, **caractérisé en ce que** le premier trajet de circulation (62) et le deuxième trajet de circulation (56) s'étendent sensiblement perpendiculairement l'un par rapport à l'autre.

3. Dispositif (10) selon l'une quelconque des revendications précédentes, **caractérisé en ce qu'**au moins l'un des trajets de circulation (56) est rectiligne.

4. Dispositif (10) selon l'une quelconque des revendications précédentes, **caractérisé en ce qu'**au moins l'un des trajets de circulation (62) est en forme d'arc de cercle.

5. Dispositif (10) selon l'une quelconque des revendications précédentes, **caractérisé en ce qu'**un dispositif de maintien indépendant du premier dispositif d'entraînement (68) et du deuxième entraînement (70) est prévu, pour maintenir le dispositif de pression dans une position prédéterminée à l'aide des dispositifs d'entraînement de la plage d'action du dispositif de pression (28).

6. Dispositif (10) selon l'une quelconque des revendications précédentes, **caractérisé en ce qu'**un dispositif de support (46) est prévu pour supporter le dispositif de pression (28) sur un châssis (48).

7. Dispositif 10) selon la revendication 6, **caractérisé en ce que** le dispositif de support (46) comprend un palier de butée (64) et un palier de pivotement (54).

8. Dispositif (10) selon la revendication 6 ou 7, **caractérisé en ce qu'**un dispositif d'application de force (84, 86) est prévu, lequel exerce une force de freinage ou d'accélération sur une partie de palier (50, 60) du dispositif de support (46) se déplaçant en va-et-vient entre deux positions d'inversion.

9. Dispositif (10) selon l'une quelconque des revendications précédentes, **caractérisé en ce que** l'outil de travail de finition (42) est un outil de finition (44) pour le travail de finition de la surface périphérique (98) de la pièce à usiner.

10. Dispositif (10) selon l'une quelconque des revendications précédentes, **caractérisé en ce qu'**un dispositif entraînement oscillatoire (24) est prévu, pour appliquer à la pièce à usiner un mouvement d'oscillation parallèle à l'axe de pièce à usiner (12).

11. Dispositif (10) selon l'une quelconque des revendications précédentes, **caractérisé en ce qu'**un dispositif d'entraînement en rotation (18) est prévu, pour faire tourner la pièce à usiner (94) autour de l'axe de pièce à usiner(12).

12. Procédé pour faire fonctionner un dispositif (10) selon la revendication 11, **caractérisé en ce que** le dispositif d'entraînement en rotation (18) va être utilisé pour faire tourner la pièce à usiner (94), et **en ce que** le premier dispositif d'entraînement (68) et le deuxième dispositif d'entraînement (70) sont inactifs, de sorte que le dispositif de liaison (88) va être commuté de telle sorte que la liaison fonctionnelle entre le premier dispositif d'entraînement (68) et le dispositif de pression (28) et entre le deuxième entraînement (70) et le dispositif de pression (28) est interrompue.

13. Procédé pour faire fonctionner un dispositif (10) selon l'une quelconque des revendications 1 à 11, **caractérisé en ce que** pour faire tourner la pièce à usiner (94) autour de l'axe de pièce à usiner (12) exclusivement le premier dispositif d'entraînement (68) et/ou le deuxième dispositif d'entraînement (70) est ou sont utilisés.
